# EUROPÄISCHE PATENTANMELDUNG

(11) **EP 2 025 232 A1**
(43) Veröffentlichungstag der Anmeldung: **18.02.2009**
(21) Anmeldenummer: 07016061.9
(22) Anmeldetag: 16.08.2007
(51) Int. Cl.: A21D 6/00, A21D 10/04, A23L 3/16, A21D 13/00

(54) **Verfahren zur Herstellung eines fliessfähigen Teiges**

(71) Anmelder: Frischli Milchwerke GmbH, 31543 Rehburg-Loccum (DE)
(72) Erfinder: Holtorf, Hans, 31535 Neustadt / Rbg. (DE); Schäkel, Lars, 31582 Nienburg (DE); Winkelmann, Timo Dr., 31515 Wunstorf (DE)
(74) Vertreter: Jabbusch, Matthias

(57) **Zusammenfassung**

Bei einem Verfahren zum Herstellen eines fließfähigen Teiges, insbesondere eines Waffelteiges, bei dem mindestens eine zumindest mehl- und ölhaltige Masse mit einer wenigstens Wasser und/oder Milchanteile enthaltenden Flüssigphase vermengt wird, werden die mehl- und ölhaltige Masse und die Flüssigphase, bevor sie miteinander vermengt werden, jeweils separat voneinander haltbar gemacht. Nach dem Vermengen, was vorzugsweise unter sterilen Umgebungsbedingungen erfolgt, wird dann der sich bildende fließfähige Teig portioniert und abgefüllt.

## Beschreibung

Die Erfindung betrifft ein Verfahren zum Herstellen eines fließfähigen Teiges, insbesondere eines Waffelteiges, bei dem mindestens eine zumindest mehl- und ölhaltige Masse mit einer wenigstens Wasser und/oder Milchanteile enthaltenden Flüssigphase vermengt wird.

Es ist zum Beispiel bekannt, zur Herstellung eines fließfähigen Teiges, aus dem sich Eierkuchen, Krapfen oder dergleichen erzeugen lassen, ein als Trockenmasse ausgebildetes Halbfertigerzeugnis zu verwenden. Solchen Halbfertigerzeugnissen wird dann durch einen Endverbraucher im Anwendungsfall nur noch eine wenigstens Wasser und/oder Milchanteile, wie zum Beispiel Milchpulver, enthaltende Flüssigphase zugegeben und mit diesem zu einem fließfähigen Teig vermischt bzw. vermengt.

Bei derartigen, durch den Endverbraucher zu erzeugenden Waffel- bzw. Pfannkuchenteigen können sich durch eine unsachgemäße Handhabung bei deren Herstellung gegebenenfalls Klumpen bilden, wodurch die Qualität der daraus herzustellenden Verzehrprodukte wiederum stark eingeschränkt ist. Zudem bedeutet das Vermischen oder Verrühren der miteinander zu vermengenden, als Trockenmasse und Flüssigphase vorliegenden Komponenten stets einen erhöhten Arbeitsaufwand für einen Endverbraucher.

Der Erfindung liegt die Aufgabe zugrunde, ein Verfahren zum Herstellen eines fließfähigen Teiges aufzuzeigen, mittels dem sich ein bereits fertiger und zugleich ungekühlt haltbarer Waffelteig erzeugen läßt.

Die Lösung der Aufgabe erfolgt erfindungsgemäß durch ein Verfahren mit den Merkmalen des Patentanspruchs 1. Vorteilhafte Weiterbildungen und Ausgestaltungen der Erfindung sind in den Ansprüchen 2 bis 9 angegeben.

Bei einem Verfahren zum Herstellen eines fließfähigen Teiges, insbesondere eines Waffelteiges, bei dem mindestens eine zumindest mehl- und ölhaltige Masse mit einer wenigstens Wasser und/oder Milchanteile enthaltenden Flüssigphase vermengt wird, ist nach der Erfindung vorgesehen, daß die mehl- und ölhaltige Masse und die Flüssigphase, bevor sie miteinander vermengt werden, jeweils separat voneinander haltbar gemacht werden, und nach dem Vermengen der sich bildende fließfähige Teig portioniert und abgefüllt wird.

Mit Hilfe eines derartig erfindungsgemäßen Verfahrens läßt sich ein fertiger, fließfähiger Teig herstellen, der stets vorteilhaft einfach zu einem Verzehrprodukt weiterverarbeitet werden kann. Ein zeitaufwendiges Anmischen der jeweils getrennt als Mehl-/Ölmasse und Flüssigphase vorliegenden Komponenten kann mit Vorteil entfallen. Darüber hinaus ist gleichzeitig eine relativ konstante Qualität der aus dem Teig zu erzeugenden Verzehrprodukte gewährleistet, da zur Herstellung des fließfähigen Teiges durch den Endverbraucher keine weiteren Zubereitungsschritte mehr erforderlich sind. Beeinträchtigungen in der Produktqualität, wie zum Beispiel ein Verklumpen beim Anrühren, können somit auf vorteilhafte Weise vermieden werden. Die separate Haltbarmachung der mehl- und ölhaltigen Masse und der Flüssigphase kann zum einen mittels vorbestimmter Verarbeltungsschritte, welche von wenigstens einem der beiden Komponenten durchlaufen werden muß, oder beispielsweise durch die Zugabe von Zusatzstoffen sichergestellt werden. Das portionsweise Abfüllen des sich aus der Masse und der Flüssigphase ausbildenden, fließfähigen Teiges kann sowohl in bekannte, für Endverbraucher geeignete Behältnisse als auch in entsprechend für Großkunden ausgelegte Gebinde erfolgen. Der insbesondere durch dieses Verfahren erzeugte Teig kann zur Herstellung von Eierkuchen, Pfannkuchen, Krapfen, Plinsen oder dergleichen dienen.

Nach einer vorteilhaften Weiterbildung der Erfindung ist vorgesehen, daß die Masse und die Flüssigphase während ihrer Haltbarmachung mindestens einmal erhitzt werden. Das Erhitzen der die Grundlage zur Herstellung des Teiges bildenden Komponenten stellt eine vorteilhaft einfache Möglichkeit zur Haltbarmachung des erfindungsgemäß hergestellten Teiges dar. Durch das separate Erhitzen der Mehl-/Olmasse und der Flüssigphase wird des weiteren, entgegen dem Erhitzen eines bereits fertig vermengten Teiges, mit Vorteil das Verklumpen bzw. ein Ausfällen von in der Masse und der Flüssigphase enthaltenen Bestandteilen in dem bzw. aus dem relativ homogenen Teig vermieden.

Die mehl- und ölhaltige Masse und die Flüssigphase werden bevorzugt jeweils bei mehr als 100 Grad Celsius sterilisiert, wodurch sich sowohl bei der Mehl-/Ölmasse als auch bei der Flüssigphase eine vorteilhafte Inaktivierung aller darin angesiedelten, ein Verderben des Teiges bewirkenden Keime, erzielen läßt. Die den Teig ausbildende Masse und Flüssigphase können insbesondere unterschiedlichen Temperaturen und Zeiträumen, während des sogenannten Ultrahocherhitzens, ausgesetzt werden. Die Flüssigphase wird über eine Zeitdauer von 6 Minuten auf etwa 122 Grad Celsius erhitzt, hingegen die Mehl-/Ölmasse nur 20 Sekunden lang jedoch auf ungefähr 140 Grad Celsius.

Die Flüssigphase wird vor dem Sterilisieren auf 95 Grad Celsius vorerhitzt, so daß die darin enthaltenen Molkenproteine mit Vorteil denaturiert werden. Für eine anzustrebende Denaturierung ist vorgesehen, daß ein Anteil von etwa 95 % der in der Flüssigphase enthaltenen Molkenproteine denaturiert wird. Somit sind eine lange Standzeit der Flüssigphase während des Ultrahocherhitzens, sowie verbesserte Produkteigenschaften während des Backens des erfindungsgemäß hergestellten Teiges gewährleistet. Die sich vornehmlich aus Wasser und Magermilch zusammensetzende Flüssigphase kann des weiteren geschmacksunterstützende Stoffe, wie zum Beispiel Zucker, Volleipulver, Salz, Vanillearoma sowie bestimmte Stabilisierungskomponenten enthalten.

Nach dem Erhitzen ist vorgesehen, daß die Flüssigphase homogenisiert wird. Die Homogenisierung ist insbesondere für eine gleichmäßige Größenverteilung der Partikel der Trockensubstanzen in der Flüssigphase verantwortlich, wodurch sich beim Backen des erfindungsgemäß hergestellten Teiges eine gleichmäßige Bräunung des daraus erzeugten Verzehrproduktes erzielen läßt.

Die Homogenisierung der Flüssigphase erfolgt vorzugsweise aseptisch bei etwa 150 bar, wodurch neben einer optimalen Partikelverteilung in der Flüssigphase mit Vorteil eine nahezu keimfreie Verarbeitung der Flüssigphase bewirkt ist. Somit ist stets eine hohe Produktsicherheit über den gesamten Verfahrensablauf gewährleistet. Es ist ebenfalls denkbar, die Einhaltung vorbestimmter Temperaturkurven bzw. -verläufe in der Flüssigphase vorausgesetzt, eine nicht aseptische Homogenisierung und die Ulrahocherhitzung in umgekehrter Reihenfolge durchzuführen.

Die Flüssigphase wird unmittelbar vor ihrer Homogenisierung auf eine vorbestimmte Temperatur, von etwa 55 Grad Celsius abgekühlt. Die Abkühlung der Flüssigphase auf dieses vorbestimmte Temperaturniveau wirkt sich ebenfalls vorteilhaft auf die optimale Größenverteilung der Partikel in der Flüssigphase und demzufolge innerhalb des darüber herzustellenden Teiges aus. Gleichzeitig ist durch das Abkühlen der Flüssigphase deren vorteilhaft einfache Weiterverarbeitung in den sich daran anschließenden, noch verbleibenden Verarbeitungsschritten gegeben.

Direkt vor dem Vermengen werden die mehl- und ölhaltige Masse und die Flüssigphase auf etwa 30 Grad Celsius abgekühlt. Dadurch ist beim Vermengen der Komponenten ein Verklumpen bzw. ein Ausfällen einzelner Bestandteile in bzw. aus dem erfindungsgemäß herstellbaren Teig mit Vorteil verhindert. Des weiteren lassen sich die Mehl-/Ölmasse und die Flüssigphase bei einer derartig gewählten Temperatur In der weiteren Verfahrensabfolge zu einem Teig mit einer vorteilhaft zu verarbeitenden Konsistenz bzw. Zähigkeit vermischen.

Nach einer anderen Weiterbildung der Erfindung ist vorgesehen, daß das Vermengen in steriler Umgebung vorgenommen wird. Zu diesem Zweck werden die Masse und die Flüssigphase in einen Steriltank gegeben und darin mit Hilfe eines Rührwerks gleichmäßig vermengt. Das Vermengen in steriler Umgebung stellt ebenfalls eine keimfreie Verarbeitung der Komponenten sicher, was zugleich Voraussetzung für eine vorteilhaft geringe Gesamtkeimzahl im Teig ist. Mit Hilfe der meßbaren Gesamtkeimzahl lassen sich insbesondere Rückschlüsse auf die zu erwartende Haltbarkeit des erfindungsgemäß hergestellten Fertigteiges ziehen, der in der Regel bei Raumtemperatur eine Mindesthaltbarkeit von 8 Wochen aufweist.

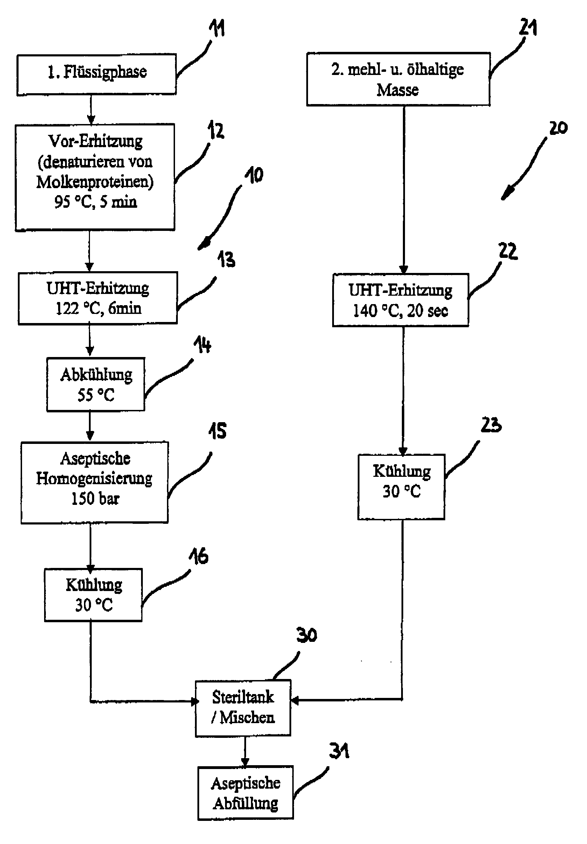

Ein Ausführungsbeispiel eines erfindungsgemäßen Herstellungsverfahrens für fließfähige Teige, aus dem sich weitere erfinderische Merkmale ergeben, ist in der Zeichnung schematisch dargestellt. Die Zeichnung zeigt ein Fließschema, welches den Ablauf des Verfahrens und eine mögliche Abfolge einzelner darin angeführter Verfahrensschritte verdeutlicht.

Die im Teilprozeß 10 als Milch- bzw. Wasserphase vorliegende Flüssigphase 11 wird zuerst über eine Zeitdauer von 5 Minuten auf 95 Grad Celsius vorerhitzt 12, wodurch eine Denaturierung der in der Flüssigphase enthaltenen Molkenproteine bewirkt ist. Anschließend wird die vorerhitzte Flüssigphase zur Sterilisation einer Ultrahocherhitzung 13 zugeführt, wobei eine Temperatur von 122 Grad Celsius vorherrscht und die Flüssigphase dieser Temperatur etwa 6 Minuten lang ausgesetzt wird. Im Anschluß daran findet eine Abkühlung 14 der Flüssigphase auf etwa 55 Grad Celsius statt. Nach Erreichen der Abkühltemperatur durchläuft die Flüssigphase eine aseptische Homogenisierung 15 bei etwa 150 bar. Die nahezu keiminaktive Flüssigphase wird anschließend auf 30 Grad Celsius abgekühlt 16 und in einen Steriltank 30 eingegeben.

Gleichzeitig wird in einem parallel ablaufenden Teilprozeß 20 eine mehl- und ölhaltige Masse 21 auf etwa 140 Grad Celsius über eine Zeitdauer von 20 Sekunden ultrahocherhitzt 22, so daß auch in der mehl- und ölhaltigen Masse eine Keiminaktivisrung erzielt wird. Nach Kühlung 23 der Mehl-/Ölmasse auf ebenfalls 30 Grad Celsius wird diese in den Steriltank 30, beispielsweise gleichzeitig mit der auf dem selben Temperaturniveau befindlichen Flüssigphase oder in einer vorbestimmten Abfolge zur Flüssigphase, eingegeben. Im Steriltank 30 wird dann die Mischung der Flüssigphase (ca. 65 % Massenanteil) und der Mehl-/Ölmasse (ca. 35 % Massenanteil) mittels Rührwerk durchgeführt. Das Mischungsverhältnis kann je nach gewünschtem Endprodukt in vorbestimmten Grenzen variieren, wobei in der Regel ein zähflüssiger, cremefarbener Teig erzeugt wird. Dieser wird nun aseptisch in entsprechende Behältnisse bzw. Gebinde abgefüllt 31 und läßt sich auf vorteilhaft einfache Welse durch einen Endverbraucher entweder durch Backen oder Fritieren in Öl zu einem gewünschten Verzehrprodukt weiterverarbeiten.

## Patentansprüche

1. Verfahren zum Herstellen eines fließfähigen Teiges, insbesondere eines Waffelteiges, bei dem mindestens eine zumindest mehl- und ölhaltige Masse mit einer wenigstens Wasser und/oder Milchanteile enthaltenden Flüssigphase vermengt wird,
**dadurch gekennzeichnet,**
**daß** die mehl- und ölhaltige Masse und die Flüssigphase, bevor sie miteinander vermengt werden, jeweils separat voneinander haltbar gemacht werden, und nach dem Vermengen der sich bildende fließfähige Teig portioniert und abgefüllt wird.

2. Verfahren nach Anspruch 1, **dadurch gekennzeichnet, daß** die Masse und die Flüssigphase während ihrer Haltbarmachung mindestens einmal erhitzt werden.

3. Verfahren nach Anspruch 2, **dadurch gekennzeichnet, daß** die mehl- und ölhaltige Masse und die Flüssigphase jeweils bei mehr als 100 Grad Celsius sterilisiert werden.

4. Verfahren nach einem der Ansprüche 2 und 3, **dadurch gekennzeichnet, daß** die Flüssigphase vor dem Sterilisieren auf 95 Grad Celsius vorerhitzt wird.

5. Verfahren nach einem der Ansprüche 2 bis 4, **dadurch gekennzeichnet, daß** die Flüssigphase nach dem Erhitzen homogenisiert wird.

6. Verfahren nach Anspruch 5, **dadurch gekennzeichnet, daß** die Homogenisierung der Flüssigphase aseptisch bei etwa 150 bar erfolgt.

7. Verfahren nach einem der Ansprüche 5 und 6, **dadurch gekennzeichnet, daß** die Flüssigphase unmittelbar vor ihrer Homogenisierung auf eine vorbestimmte Temperatur abgekühlt wird.

8. Verfahren nach einem der Ansprüche 1 bis 7, **dadurch gekennzeichnet, daß** die mehl- und ölhaltige Masse und die Flüssigphase direkt vor dem Vermengen auf etwa 30 Grad Celsius abgekühlt werden.

9. Verfahren nach einem der Ansprüche 1 bis 8, **dadurch gekennzeichnet, daß** das Vermengen in steriler Umgebung vorgenommen wird.
